# EUROPÄISCHE PATENTANMELDUNG

(11) **EP 1 845 282 A1**
(43) Veröffentlichungstag der Anmeldung: **17.10.2007**
(21) Anmeldenummer: 07006157.7
(22) Anmeldetag: 26.03.2007
(51) Int. Cl.: F16F 15/121, F16F 6/00

(54) **Drehschwingungsdämpfer**

(30) Priorität: 15.04.2006 DE 102006017689
(71) Anmelder: LuK Lamellen und Kupplungsbau Beteiligungs KG, 77815 Bühl (DE)
(72) Erfinder: Frey, Estelle, 67160 Altenstadt (FR); Schwederle, Philippe, 67000 Strasbourg (FR); Mende, Hartmut, 77815 Bühl (DE)

(57) **Zusammenfassung**

Die Erfindung betrifft einen Drehschwingungsdämpfer, insbesondere ein geteiltes Schwungrad, mit einem Eingangsteil und einem Ausgangsteil, das gegen den Widerstand mindestens einer ersten Energiespeichereinrichtung und mindestens einer parallel zu der ersten Energiespeichereinrichtung geschalteten zweiten Energiespeichereinrichtung relativ zu dem Eingangsteil verdrehbar ist.

Der Drehschwingungsdämpfer zeichnet sich dadurch aus, dass die zweite Energiespeichereinrichtung eine Magneteinrichtung umfasst.

## Beschreibung

Die Erfindung betrifft einen Drehschwingungsdämpfer, insbesondere ein geteiltes Schwungrad, mit einem Eingangsteil und einem Ausgangsteil, das gegen den Widerstand mindestens einer ersten Energiespeichereinrichtung und mindestens einer parallel zu der ersten Energiespeichereinrichtung geschalteten zweiten Energiespeichereinrichtung relativ zu dem Eingangsteil verdrehbar ist.

Derartige Drehschwingungsdämpfer, die auch als Torsionsschwingungsdämpfer bezeichnet werden, sind zum Beispiel zwischen den Antriebsmotor und das Getriebe eines Kraftfahrzeugs geschaltet. Je nach Betriebsart werden das Eingangsteil und das Ausgangsteil um mehr oder weniger große Verdrehwinkel gegeneinander verdreht. Dabei können im Betrieb der Brennkraftmaschine Ungleichförmigkeiten auftreten, die das Eingangsteil zu Schwingungen anregen. Diese Schwingungen sollen nicht auf das Ausgangsteil übertragen werden, da sie in einem mit dem Ausgangsteil gekoppelten Getriebe zu Beschädigungen führen könnten.

Aufgabe der Erfindung ist es, einen Drehschwingungsdämpfer gemäß dem Oberbegriff des Anspruchs 1 zu schaffen, der es ermöglicht, im Betrieb der Brennkraftmaschine auftretende Ungleichförmigkeiten schwingungstechnisch zu isolieren.

Die Aufgabe ist bei einem Drehschwingungsdämpfer, insbesondere einem geteilten Schwungrad, mit einem Eingangsteil und einem Ausgangsteil, das gegen den Widerstand mindestens einer ersten Energiespeichereinrichtung und mindestens einer parallel zu der ersten Energiespeichereinrichtung geschalteten zweiten Energiespeichereinrichtung relativ zu dem Eingangsteil verdrehbar ist, dadurch gelöst, dass die zweite Energiespeichereinrichtung eine Magneteinrichtung umfasst. Bei der zweiten Energiespeichereinrichtung handelt es sich vorzugsweise um eine auf dem Magnetprinzip basierende Hystereseeinrichtung oder Reibeinrichtung, die insbesondere die Realisierung einer inversen oder negativen Kennlinie ermöglicht.

Ein bevorzugtes Ausführungsbeispiel des Drehschwingungsdämpfers ist dadurch gekennzeichnet, dass die Magneteinrichtung mindestens zwei, insbesondere zwei Paar, miteinander zusammenwirkende Magnetelemente mit gleichnamigen und ungleichnamigen Magnetpolen umfasst. Bei den Magnetelementen handelt es sich vorzugsweise um Dauermagneten, die auch als Permanentmagnete bezeichnet werden, und jeweils einen positiven und einen negativen Pol aufweisen.

Ein weiteres bevorzugtes Ausführungsbeispiel des Drehschwingungsdämpfers ist dadurch gekennzeichnet, dass die gleichnamigen Pole der Magnetelemente einander zugewandt sind. Die gleichnamigen Pole der miteinander zusammenwirkenden Magnetelemente stoßen sich ab.

Ein weiteres bevorzugtes Ausführungsbeispiel des Drehschwingungsdämpfers ist dadurch gekennzeichnet, dass die ungleichnamigen Pole der Magnetelemente einander zugewandt sind. Die ungleichnamigen Pole der miteinander zusammenwirkenden Magnetelemente ziehen sich an.

Ein weiteres bevorzugtes Ausführungsbeispiel des Drehschwingungsdämpfers ist dadurch gekennzeichnet, dass mindestens eines der Magnetelemente mit dem Eingangsteil oder dem Ausgangsteil und mindestens eines der Magnetelemente mit dem Ausgangsteil oder dem Eingangsteil des Drehschwingungsdämpfers gekoppelt ist. Vorzugsweise sind die Magnetelemente an zugehörigen Trageinrichtungen angebracht, die wiederum mit dem Ausgangsteil oder dem Eingangsteil des Drehschwingungsdämpfers verbunden sind. Die Magnetelemente können aber auch in das Ausgangsteil oder das Eingangsteil des Drehschwingungsdämpfers integriert sein.

Ein weiteres bevorzugtes Ausführungsbeispiel des Drehschwingungsdämpfers ist dadurch gekennzeichnet, dass zwei Magnetelemente so an einem Tragring angebracht sind, dass die zwei gleichnamigen Pole dieser Magnetelemente einander zugewandt sind. Dadurch wird auf einfache Art und Weise die Realisierung einer Reibsteuereinrichtung mit einer inversen oder negativen Kennlinie ermöglicht.

Ein weiteres bevorzugtes Ausführungsbeispiel des Drehschwingungsdämpfers ist dadurch gekennzeichnet, dass die beiden an dem Tragring angebrachten Magnetelemente in Umfangsrichtung so zwischen zwei weiteren Magnetelementen angeordnet sind, dass die gleichnamigen Pole dieser Magnetelemente einander zugewandt sind. Die zwei weiteren Magnetelemente sind vorzugsweise drehfest mit dem Ausgangsteil des Drehschwingungsdämpfers verbunden.

Ein weiteres bevorzugtes Ausführungsbeispiel des Drehschwingungsdämpfers ist dadurch gekennzeichnet, dass zwei Magnetelemente so an einem Tragring angebracht sind, dass die zwei ungleichnamigen Pole dieser Magnetelemente einander zugewandt sind. Dadurch wird auf einfache Art und Weise die Realisierung einer inversen oder negativen Federkennlinie ermöglicht.

Ein weiteres bevorzugtes Ausführungsbeispiel des Drehschwingungsdämpfers ist dadurch gekennzeichnet, dass die beiden an dem Tragring angebrachten Magnetelemente in Umfangsrichtung so zwischen zwei weiteren Magnetelementen angeordnet sind, dass die ungleichnamigen Pole dieser Magnetelemente einander zugewandt sind. Die zwei weiteren Magnetelemente sind vorzugsweise drehfest mit dem Ausgangsteil des Drehschwingungsdämpfers verbunden.

Ein weiteres bevorzugtes Ausführungsbeispiel des Drehschwingungsdämpfers ist dadurch gekennzeichnet, dass der Tragring reibschlüssig mit dem Eingangsteil des Drehschwingungsdämpfers verbunden ist. Daher wird der Tragring auch als Reibring bezeichnet.

Ein weiteres bevorzugtes Ausführungsbeispiel des Drehschwingungsdämpfers ist dadurch gekennzeichnet, dass die Magnetelemente so gestaltet und angeordnet sind, dass die Wirkungslinie einer von den Magnetelementen ausgeübten Magnetkraft tangential zur Umfangsrichtung verläuft. Die Magnetelemente entfalten ihre Kraftwirkung dann in der gleichen oder entgegengesetzten Richtung wie Bogenfedern der ersten Energiespeichereinrichtung.

Ein weiteres bevorzugtes Ausführungsbeispiel des Drehschwingungsdämpfers ist dadurch gekennzeichnet, dass die Magnetelemente so gestaltet und angeordnet sind, dass die Wirkungslinie einer von den Magnetelementen ausgeübten Magnetkraft schräg zu einer Tangentialen zur Umfangsrichtung verläuft. Durch eine definierte Schrägstellung der Magnetelemente kann eine Axialkraft erzeugt werden, mittels der wiederum eine variable Hysterese realisierbar ist. Durch die Schrägstellung kann insbesondere eine in axialer Richtung auf den Trag- oder Reibring wirkende Kraftkomponente der Magnetkraft erzeugt werden. So kann in Abhängigkeit vom Schrägungswinkel gezielt eine Abschwächung oder Verstärkung der Reibungshysterese bewirkt werden.

Ein weiteres bevorzugtes Ausführungsbeispiel des Drehschwingungsdämpfers ist dadurch gekennzeichnet, dass die Magnetelemente so gestaltet und angeordnet sind, dass die Magnetelemente in einem Winkelbereich von 1 bis 10 Grad, insbesondere 5 bis 6 Grad, wirksam sind. Die beiden Energiespeichereinrichtungen dienen dazu, im Betrieb der Brennkraftmaschine auftretende, oszillierende Schwingungen nicht auf das Ausgangsteil beziehungsweise die Sekundärschwungmasse zu übertragen, die drehfest mit einer Getriebeeingangswelle verbunden sein kann. Der Verdrehwinkel, bis zu dem die zweite Energiespeichereinrichtung ihre vorzugsweise degressive Wirkung entfalten soll, wird auch als Freiwinkel bezeichnet. Die insbesondere degressive Wirkung der zweiten Energiespeichereinrichtung ist vorzugsweise so mit der Wirkung der ersten Energiespeichereinrichtung abgestimmt, dass die Wirkung der ersten Energiespeichereinrichtung im Freiwinkelbereich nahezu kompensiert wird.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine schematische Darstellung eines ersten Ausführungsbeispiels eines erfindungsgemäßen Drehschwingungsdämpfers;
- Figur 2: eine schematische Darstellung eines zweiten Ausführungsbeispiels eines erfindungsgemäßen Drehschwingungsdämpfers;
- Figur 3: einen Drehschwingungsdämpfer gemäß einem weiteren Ausführungsbeispiel in einer teilweise aufgebrochenen Draufsicht;
- Figur 4: die Ansicht eines Schnitts entlang der Linie IV-IV in Figur 3;
- Figur 5: die Ansicht eines Schnitts entlang der Linie V-V in Figur 3;
- Figur 6: die Ansicht eines Schnitts entlang der Linie VI-VI in Figur 3;
- Figur 7: die Ansicht eines Schnitts entlang der Linie VII-VII in Figur 5;
- Figur 8: ein kartesisches Koordinatendiagramm mit einer Kennlinie des in den Figuren 3 bis 6 dargestellten Drehschwingungsdämpfers;
- Figur 9: eine ähnliche Darstellung wie in Figur 7 gemäß einem weiteren Ausführungsbeispiel und
- Figur 10: ein kartesisches Koordinatendiagramm mit einer Kennlinie zu dem in Figur 9 dargestellten Ausführungsbeispiel.

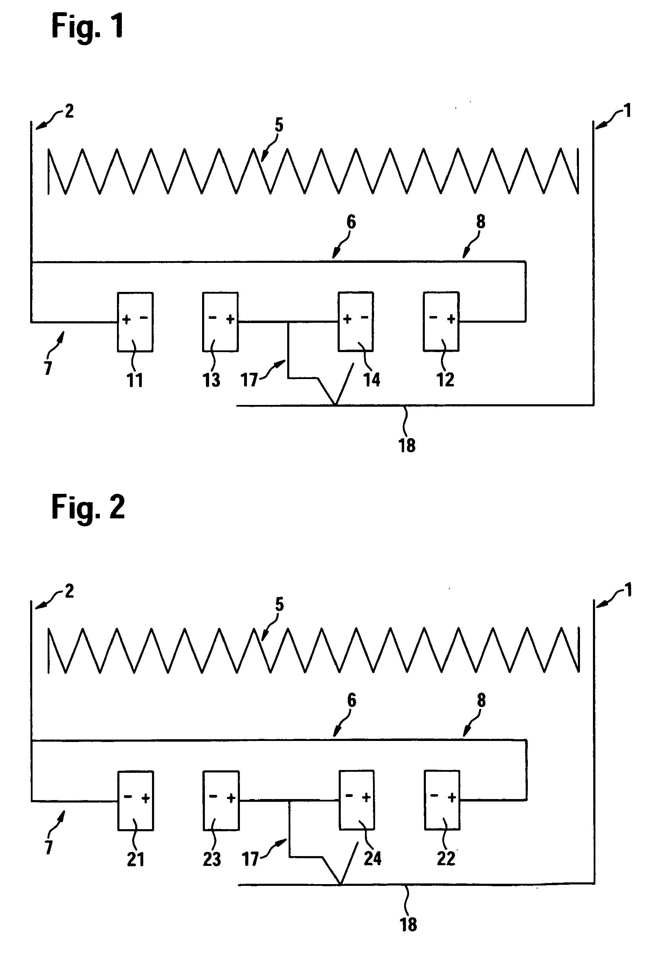

In Figur 1 ist ein Drehschwingungsdämpfer mit einem Eingangsteil 1 und einem Ausgangsteil 2 schematisch dargestellt. Das Eingangsteil 1 ist durch eine erste Energiespeichereinrichtung 5 mit dem Ausgangsteil 2 gekoppelt. Bei der ersten Energiespeichereinrichtung 5 handelt es sich um eine Federeinrichtung. Eine zweite Energiespeichereinrichtung 6 ist parallel zu der ersten Energiespeichereinrichtung 5 geschaltet. Die zweite Energiespeichereinrichtung 6 umfasst eine Trageinrichtung 7, die drehfest mit dem Ausgangsteil 2 des Drehschwingungsdämpfers verbunden ist. Die zweite Energiespeichereinrichtung 6 umfasst des Weiteren eine Trageinrichtung 8, die drehfest mit dem Eingangsteil des Drehschwingungsdämpfers verbunden ist.

Gemäß einem wesentlichen Aspekt der Erfindung umfasst die zweite Energiespeichereinrichtung 6 vier Magnetelemente 11 bis 14, die paarweise miteinander zusammenwirken. Die Magnetelemente 11 und 12 sind voneinander beabstandet so an der Trageinrichtung 8 befestigt, dass die Minuspole der Magnetelemente 11 und 12 einander zugewandt sind. Zwischen den beiden Magnetelementen 11 und 12 sind die Magnetelemente 13 und 14 voneinander beabstandet so angeordnet, dass die Pluspole der Magnetelemente 13, 14 einander zugewandt sind. Das Magnetelement 13 ist in einem Abstand zu dem Magnetelement 11 so angeordnet, dass die Minuspole der beiden Magnetelemente 11 und 13 einander zugewandt sind. Das Magnetelement 14 ist einem Abstand zu dem Magnetelement 12 so angeordnet, dass die Minuspole der Magnetelemente 12, 14 einander zugewandt sind. Die beiden Magnetelemente 13 und 14 sind an einer weiteren Trageinrichtung 17 befestigt, die reibschlüssig mit einem Abschnitt 18 des Eingangsteils 1 des Drehschwingungsdämpfers verbunden ist.

Die in Figur 1 dargestellten Magnetelementpaare 11, 12 und 13, 14 sind um einen Drehwinkel von 5 Grad relativ zueinander verdrehbar. Beim Nulldurchgang halten die Magnetelemente 11 bis 14 das Ausgangsteil 2 in der dargestellten Position, so dass die Magnetelemente 13 und 14 in der Mitte zwischen den Magnetelementen 11 und 12 angeordnet sind. Dadurch kann auf einfache Art und Weise eine Leerlaufstabilisierung des Drehschwingungsdämpfers erreicht werden.

In Figur 2 ist ein ähnlicher Drehschwingungsdämpfer wie in Figur 1 schematisch dargestellt. Zur Bezeichnung gleicher Teile werden die gleichen Bezugszeichen verwendet. Um Wiederholungen zu vermeiden, wird auf die vorangegangene Beschreibung der Figur 1 verwiesen. Im Folgenden wird nur auf die Unterschiede zwischen den beiden Ausführungsbeispielen eingegangen.

Bei dem in Figur 2 dargestellten Ausführungsbeispiel sind Magnetelementpaare aus jeweils zwei Magneten 21, 23 und 22, 24 gebildet, die sich anziehen. Die Magnetelemente 21 und 22 sind an den Trageinrichtungen 7 und 8 befestigt. Die Magnetelemente 23 und 24 sind an der Trageinrichtung 17 befestigt. Der Pluspol des Magnetelements 21 ist dem Minuspol des Magnetelements 23 zugewandt. Der Minuspol des Magnetelements 22 ist dem Pluspol des Magnetelements 24 zugewandt. Wie bei dem vorangegangenen Ausführungsbeispiel sind die Magnetelemente der Magnetelementpaare 21, 23 und 22, 24 relativ zueinander verdrehbar, und zwar um einen Winkel von circa 5 Grad. Gemäß einem wesentlichen Aspekt der Erfindung kann durch die Magnetelemente 21 bis 24 eine Kennlinie mit einer negativen Steigung realisiert werden. Dabei arbeiten die sich anziehenden Magnetelemente 21, 23 und 22, 24 gegen die Federkraft, insbesondere eine Bogenfederkraft, der ersten Energiespeichereinrichtung 5. Der Verdrehwinkel von 5 Grad wird auch als Freiwinkel bezeichnet. Nach Überwinden des Freiwinkels gehen die relativ zueinander verdrehbaren Teile der zweiten Energiespeichereinrichtung 6 auf Block und werden auf einer Gesamtkennlinie des Drehschwingungsdämpfers verschoben. Die in Figur 2 dargestellte Lösung hat unter anderem den Vorteil, dass in den Umkehrpunkten der inversen Kennlinie keine Weg/Kraft-Verluste auftreten. Darüber hinaus arbeiten die Magnetelemente 11 bis 14 und 21 bis 24 berührungsfrei.

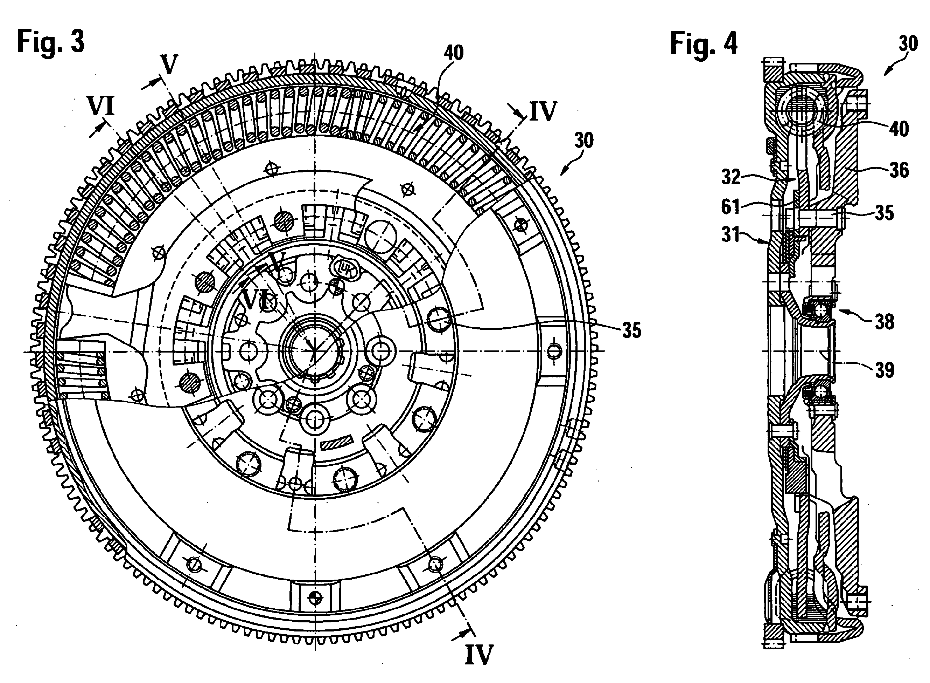

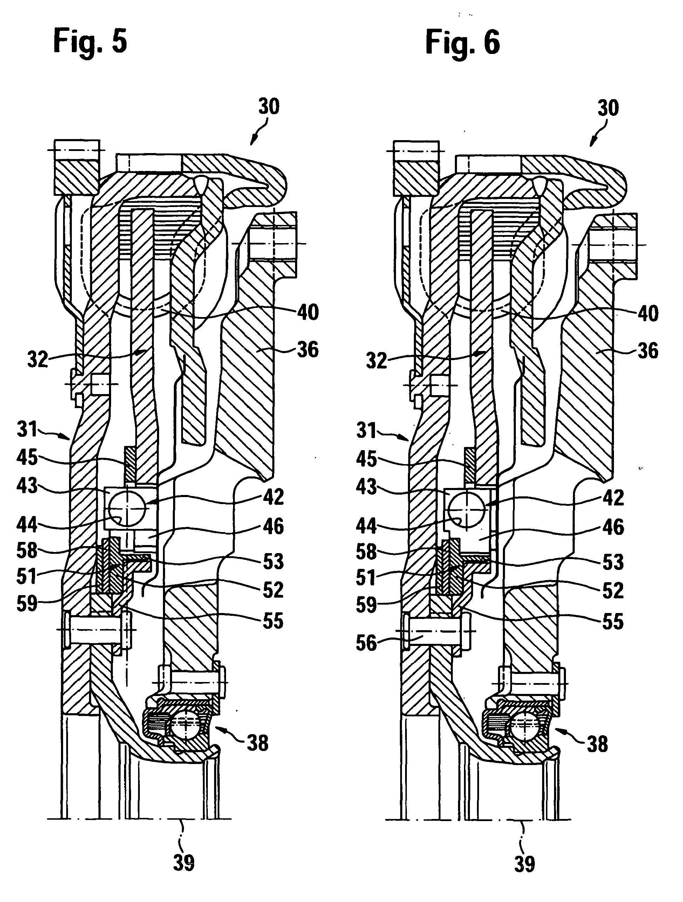

In den Figuren 3 bis 7 ist ein Drehschwingungsdämpfer 30 in verschiedenen Ansichten dargestellt. Bei dem Drehschwingungsdämpfer 30, der auch als Torsionsschwingungsdämpfer bezeichnet wird, handelt es sich um ein Zweimassenschwungrad. Das Zweimassenschwungrad 30 umfasst eine an einer Kurbelwelle einer Brennkraftmaschine eines Kraftfahrzeugs befestigbare Primärschwungmasse oder Primärmasse 31, die auch als Eingangsteil 31 bezeichnet wird. Ein Ausgangsteil 32 des Drehschwingungsdämpfers 30 ist relativ zu dem Eingangsteil 31 verdrehbar. Das Ausgangsteil 32 ist mit Hilfe von Nietverbindungselementen 35 fest mit einer Sekundärschwungmasse 36 verbunden. Bei der Sekundärschwungmasse 36 handelt es sich um das Eingangsteil einer (nicht dargestellten) Kupplungseinrichtung.

Die Sekundärschwungmasse 36 mit dem Ausgangsteil 32 ist mittels einer Lagereinrichtung 38, zum Beispiel einem Wälzlager, koaxial und verdrehbar um eine Drehachse 39 gelagert. Das Eingangsteil 31 ist über eine komprimierbare Energiespeicherelemente aufweisende Energiespeichereinrichtung 40 antriebsmäßig mit der Sekundärmasse 36 beziehungsweise dem Ausgangsteil 32 des Drehschwingungsdämpfers 30 verbunden. Bei den Energiespeicherelementen handelt es sich um sich in Umfangsrichtung erstreckende Schraubenfedern mit einem großen Kompressionsweg, die auch als Bogenfedern bezeichnet werden. Die Energiespeichereinrichtung 40 stellt die erste Energiespeichereinrichtung (siehe Figuren 1 und 2) dar.

Die zweite Energiespeichereinrichtung (siehe Figuren 1 und 2) umfasst einen Tragring 42, der an dem Ausgangsteil 32 des Drehschwingungsdämpfers 30 befestigt ist (nicht dargestellt). Der Tragring 42 umfasst einen Grundkörper 43, der mindestens eine kreiszylinderabschnittsförmige Aufnahme 44 für ein Magnetelement aufweist. Von dem Grundkörper 43 erstreckt sich ein Befestigungsflansch 45 radial nach außen. Der Befestigungsflansch 45 ist zum Beispiel durch (nicht dargestellte) Verbindungselemente an dem Ausgangsteil 32 befestigt. Des Weiteren erstreckt sich von dem Grundkörper 43 ein Fuß 46 radial nach innen.

Ein weiterer Tragring 51 ist relativ zu dem Tragring 42 um einen begrenzten Winkel von etwa 5 Grad verdrehbar. Der Tragring 51 umfasst einen Grundkörper 52 mit einem im Wesentlichen rechteckigen Querschnitt. Von dem Grundkörper 52 erstreckt sich ein abgewinkelter Schenkel 53 in axialer Richtung zum Getriebe hin. Der Tragring 51 stützt sich mit dem abgewinkelten Schenkel 53 an einem Abstützprofil 55 ab, das mit Hilfe von Nietverbindungselementen 56 an dem Eingangsteil 31 des Drehschwingungsdämpfers 30 befestigt ist. In axialer Richtung ist der Tragring 51 motorseitig durch eine Abstützscheibe 58 abgestützt. Zwischen der Abstützscheibe 58 und dem Eingangsteil 31 ist eine Tellerfeder 59 in axialer Richtung eingespannt. Die Tellerfeder 59 dient dazu, die Abstützscheibe 58 und den Grundkörper 52 des Tragrings 51 in axialer Richtung gegen das Abstützprofil 55 zu drücken, um eine reibschlüssige Verbindung zwischen dem Tragring 51 und dem Eingangsteil 31 des Drehschwingungsdämpfers 30 zu schaffen. Dadurch wird ein reibungsbehaftetes Verdrehen des Tragring 51 relativ zu dem Eingangsteil 31 ermöglicht. Der Tragring 51 entspricht der Trageinrichtung 17 in den Figuren 1 und 2.

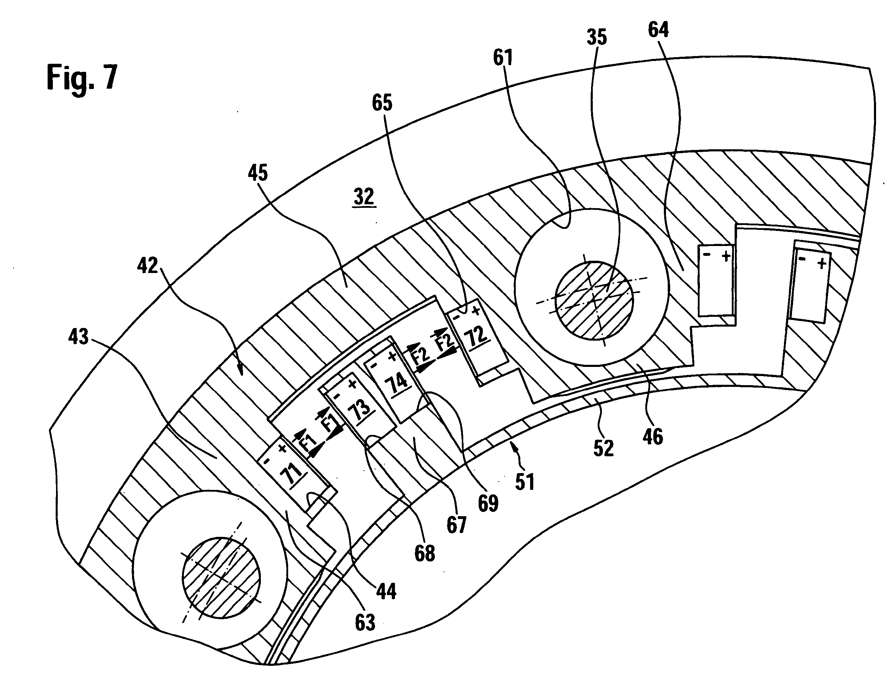

In Figur 7 sieht man, dass in dem Grundkörper 43 des Tragrings 42 Durchgangslöcher 61 zum Durchführen der Nietverbindungselemente 35 (siehe auch Figur 4) vorgesehen sind. Des Weiteren sieht man in Figur 7, dass die Aufnahme 44 in einem Magnetaufnahmeabschnitt 63 vorgesehen ist, der sich von dem ringartigen Grundkörper 43 radial nach innen erstreckt. Ein weiterer Magnetaufnahmeabschnitt 64 ist in Umfangsrichtung von dem Magnetaufnahmeabschnitt 63 beabstandet. Der Magnetaufnahmeabschnitt 64 weist in Umfangsrichtung gegenüber der Aufnahme 44 eine weitere Aufnahme 65 auf. Zwischen den beiden Magnetaufnahmeabschnitten 63 und 64 des Tragrings 42 ist ein Magnetaufnahmeabschnitt 67 angeordnet, der sich von dem ringartigen Grundkörper 52 des Tragrings 51 radial nach außen erstreckt. Der Magnetaufnahmeabschnitt 67 des Tragrings 51 weist Aufnahmen 68, 69 für Magnetelemente auf.

In den Aufnahmen 44, 65 der Tragrings 42 ist jeweils ein Magnetelement 71, 72 aufgenommen. In den Aufnahmen 68,69 des Tragrings 51 ist ebenfalls jeweils ein Magnetelement 73, 74 aufgenommen. Die Magnetelemente 71 bis 74 sind so angeordnet, dass ihre ungleichnamigen Pole einander zugewandt sind. So ist der Pluspol des Magnetelements 71 dem Minuspol des Magnetelements 73 zugewandt. Der Pluspol des Magnetelements 73 ist dem Minuspol des Magnetelements 74 zugewandt. Der Pluspol des Magnetelements 74 ist dem Minuspol des Magnetelements 72 zugewandt. Im Betrieb auftretende Kräfte sind mit F1 und F2 bezeichnet.

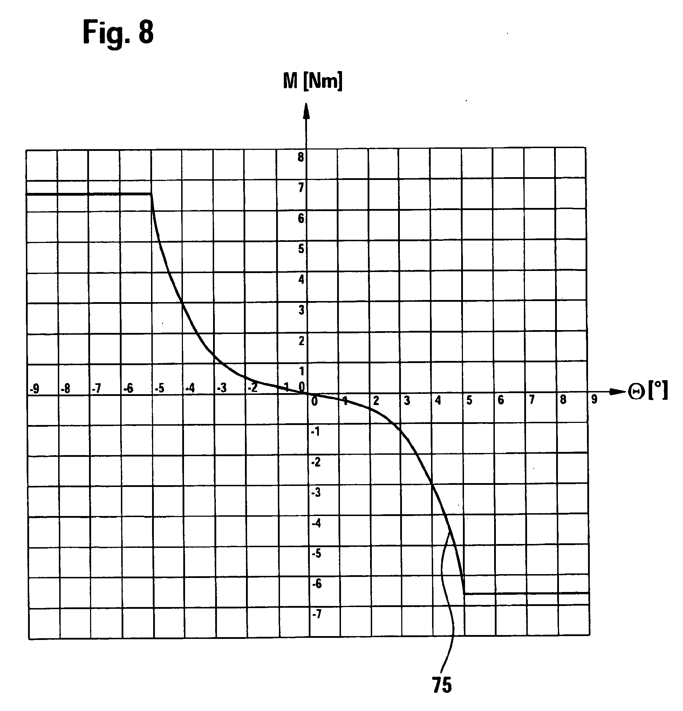

In Figur 8 ist das Drehmoment M in Nm über dem Verdrehwinkel Θ in Grad in Form einer Kennlinie 75 aufgetragen. In dem entscheidenden Bereich zwischen -5 und +5 Grad Verdrehwinkel weist die Kennlinie 75 einen inversen Verlauf mit einer negativen Steigung auf. Die sich anziehenden Magnetelemente 71, 73 und 72, 74 arbeiten gegen die Bogenfederkraft der Energiespeichereinrichtung 40 (siehe Figuren 3 bis 6). Sobald der Verdrehwinkel -5 Grad unterschreitet oder +5 Grad überschreitet, gehen die Tragringe 51 und 42 relativ zu einander auf Block und werden gemeinsam verschoben.

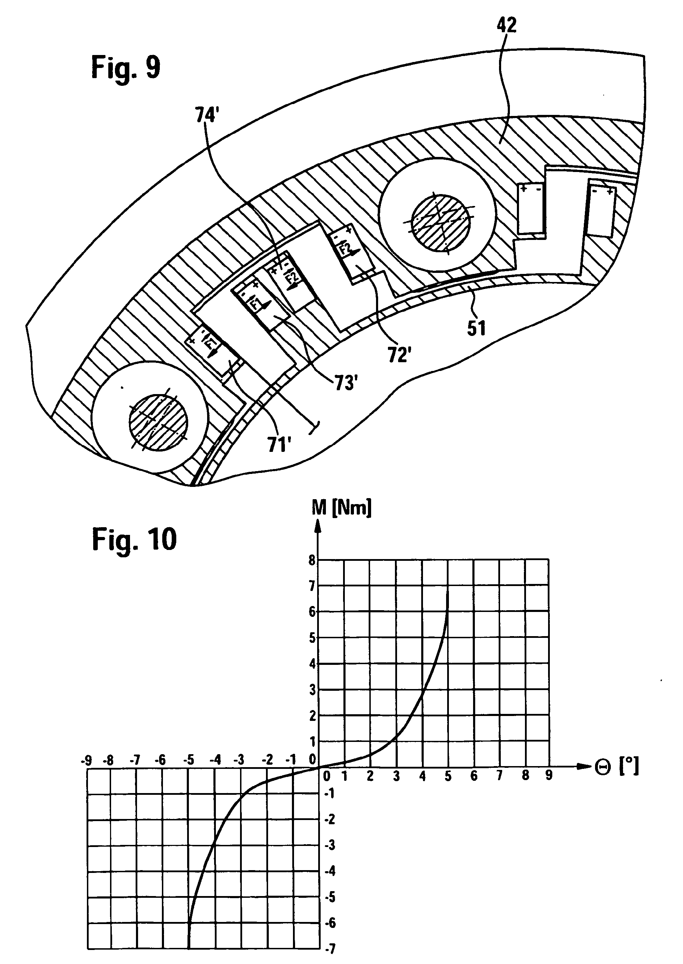

In Figur 9 ist dargestellt, dass die Magnetelemente der Magnetelementpaare 71', 73' und 72', 74' auch so angeordnet sein können, dass sie sich gegenseitig abstoßen. Der Minuspol des Magnetelements 71' ist dem Minuspol des Magnetelements 73' zugewandt. Der Minuspol des Magnetelements 74' ist dem Minuspol des Magnetelements 72' zugewandt.

Die zugehörige Kennlinie 78 ist in Figur 10 dargestellt. In dem Verdrehwinkelbereich zwischen minus und plus 5 Grad weist die Kennlinie 78 eine negative Steigung auf. Beim Nulldurchgang sorgen die Magnetelemente 71' bis 74' dafür, dass die in Figur 9 dargestellte Position beibehalten wird.

### Bezugszeichenliste

- 1.: Eingangsteil
- 2.: Ausgangsteil
- 5.: erste Energiespeichereinrichtung
- 6.: zweite Energiespeichereinrichtung
- 7.: Trageinrichtung
- 8.: Trageinrichtung
- 11.: Magnetelement
- 12.: Magnetelement
- 13.: Magnetelement
- 14.: Magnetelement
- 17.: Trageinrichtung
- 18.: Abschnitt
- 21.: Magnetelement
- 22.: Magnetelement
- 23.: Magnetelement
- 24.: Magnetelement
- 30.: Drehschwingungsdämpfer
- 31.: Eingangsteil
- 32.: Ausgangsteil
- 35.: Nietverbindungselemente
- 36.: Sekundärschwungmasse
- 38.: Lagereinrichtung
- 39.: Drehachse
- 40.: Energiespeichereinrichtung
- 42.: Tragring
- 43.: Grundkörper
- 44.: Aufnahme
- 45.: Befestigungsflansch
- 46.: Fuß
- 51.: Tragring
- 52.: Grundkörper
- 53.: abgewinkelter Schenkel
- 55.: Abstützprofil
- 56.: Nietverbindungselement
- 58.: Abstützscheibe
- 59.: Tellerfeder
- 61.: Durchgangsloch
- 63.: Magnetaufnahmeabschnitt
- 64.: Magnetaufnahmeabschnitt
- 65.: Aufnahme
- 67.: Magnetaufnahmeabschnitt
- 68.: Aufnahme
- 69.: Aufnahme
- 71.: Magnetelement
- 72.: Magnetelement
- 73.: Magnetelement
- 74.: Magnetelement
- 75.: Kennlinie
- 78.: Kennlinie

## Patentansprüche

1. Drehschwingungsdämpfer, insbesondere geteiltes Schwungrad, mit einem Eingangsteil (1 ;31) und einem Ausgangsteil (2;32), das gegen den Widerstand mindestens einer ersten Energiespeichereinrichtung (5;40) und mindestens einer parallel zu der ersten Energiespeichereinrichtung (5;40) geschalteten zweiten Energiespeichereinrichtung relativ zu dem Eingangsteil (1 ;31) verdrehbar ist, **dadurch gekennzeichnet, dass** die zweite Energiespeichereinrichtung eine Magneteinrichtung umfasst.

2. Drehschwingungsdämpfer nach Anspruch 1, **dadurch gekennzeichnet, dass** die Magneteinrichtung mindestens zwei, insbesondere zwei Paar, miteinander zusammenwirkende Magnetelemente (11-14;21-24;71-74;71'-74') mit gleichnamigen und ungleichnamigen Magnetpolen umfasst.

3. Drehschwingungsdämpfer nach Anspruch 2, **dadurch gekennzeichnet, dass** die gleichnamigen Pole der Magnetelemente (11-14;71'-74') einander zugewandt sind.

4. Drehschwingungsdämpfer nach Anspruch 2, **dadurch gekennzeichnet, dass** die ungleichnamigen Pole der Magnetelemente (21-24;71-74) einander zugewandt sind.

5. Drehschwingungsdämpfer nach einem der Ansprüche 2 bis 4, **dadurch gekennzeichnet, dass** mindestens eines der Magnetelemente (13,14;23,24;73;74;73',74') mit dem Eingangsteil (1 ;31) oder dem Ausgangsteil (2;32) und mindestens eines der Magnetelemente (11,12;21,22;71,72;71',72') mit dem Ausgangsteil (2;32) oder dem Eingangsteil (1;31) des Drehschwingungsdämpfers gekoppelt ist.

6. Drehschwingungsdämpfer nach einem der vorhergehenden Ansprüche, **dadurch gekennzeichnet, dass** zwei Magnetelemente (11,12;13,14;71',72';73',74') so an einem Tragring (7,8;17;42;51) angebracht sind, dass die zwei gleichnamigen Pole dieser Magnetelemente einander zugewandt sind.

7. Drehschwingungsdämpfer nach Anspruch 6, **dadurch gekennzeichnet, dass** die beiden an dem Tragring angebrachten Magnetelemente (13,14;73',74') in Umfangsrichtung so zwischen zwei weiteren Magnetelementen (11,12;71',72') angeordnet sind, dass die gleichnamigen Pole dieser Magnetelemente einander zugewandt sind.

8. Drehschwingungsdämpfer nach einem der Ansprüche 2 bis 7, **dadurch gekennzeichnet, dass** zwei Magnetelemente (21,22;23,24;71,72;73,74) so an einem Tragring (7,8;17;42;51) angebracht sind, dass die zwei ungleichnamigen Pole dieser Magnetelemente einander zugewandt sind.

9. Drehschwingungsdämpfer nach Anspruch 8, **dadurch gekennzeichnet, dass** die beiden an dem Tragring angebrachten Magnetelemente (23,24;73,74) in Umfangsrichtung so zwischen zwei weiteren Magnetelementen (21,22;71,72) angeordnet sind, dass die ungleichnamigen Pole dieser Magnetelemente einander zugewandt sind.

10. Drehschwingungsdämpfer nach einem der Ansprüche 6 bis 9, **dadurch gekennzeichnet, dass** der Tragring (17;51) reibschlüssig mit dem Eingangsteil (1 ;31) des Drehschwingungsdämpfers (30) verbunden ist.

11. Drehschwingungsdämpfer nach einem der Ansprüche 2 bis 10, **dadurch gekennzeichnet, dass** die Magnetelemente so gestaltet und angeordnet sind, dass die Wirkungslinie einer von den Magnetelementen (11-14;21-24;71-74;71'-74') ausgeübten Magnetkraft tangential zur Umfangsrichtung verläuft.

12. Drehschwingungsdämpfer nach einem der Ansprüche 2 bis 10, **dadurch gekennzeichnet, dass** die Magnetelemente so gestaltet und angeordnet sind, dass die Wirkungslinie einer von den Magnetelementen (11-14;21-24;71-74;71'-74') ausgeübten Magnetkraft schräg zu einer Tangentialen zur Umfangsrichtung verläuft.

13. Drehschwingungsdämpfer nach einem der Ansprüche 2 bis 12, **dadurch gekennzeichnet, dass** die Magnetelemente (11-14;21-24;71-74;71'-74') so gestaltet und angeordnet sind, dass die Magnetelemente in einem Winkelbereich von 1 bis 10 Grad, insbesondere 5 bis 6 Grad, wirksam sind.
